# EUROPEAN PATENT SPECIFICATION

(11) **EP 2 409 611 B1**
(45) Date of publication and mention of the grant of the patent: **03.04.2013**
(21) Application number: 10425248.1
(22) Date of filing: 22.07.2010
(51) Int. Cl.: A47J 31/44, G01F 23/16

(54) **Process for heating a specific quantity of liquid, particularly milk, and apparatus for implementing the process**
Verfahren zur Erhitzung einer spezifischen Menge einer Flüssigkeit, insbesondere von Milch, und Vorrichtung zur Implementierung des Verfahrens
Procédé de chauffage d'une quantité spécifique de liquide, en particulier du lait, et appareil pour la mise en oeuvre du procédé

(43) Date of publication of application: 25.01.2012
(60) Divisional application: 11185637.3
(73) Proprietor: Gruppo Cimbali S.p.A., 20082 Binasco (MI) (IT)
(72) Inventor: Erba, Roberto, 20082 Binasco (MI) (IT); Ceccaroli, Stefano, 20082 Binasco (MI) (IT)
(74) Representative: Perani, Aurelio

(56) References cited:
- EP-A1- 2 070 456
- EP-A2- 2 025 270
- EP-B1- 1 501 398
- US-A- 4 800 805
- US-A1- 2004 011 127

## Description

This invention relates to a process for heating a quantity of liquid present in a container open to atmospheric pressure which can be removed and positioned beneath the delivery extremity of the steam lance of a coffee machine, the said lance comprising at least one conduit for heating through superheated steam originating from a source thereof, the said delivery extremity being immersed in the quantity of liquid present in the container, in which heating mainly takes place through the release of heat of condensation from the superheated steam when it comes into contact with the liquid present in the container which is open to atmospheric pressure.

The invention also relates to an apparatus for implementing the process.

The liquid being heated may be water, intended for the preparations of infusions such as for example tea, camomile tea and the like, or milk, which may be intended for direct consumption or for addition to coffee.

As an alternative in the case of milk, in addition to being heated to a selectable predetermined temperature, it may also be frothed through the introduction of aspirated or compressed air.

As is known, frothed milk is widely used in coffee machines in the preparation of cappuccinos.

In order to effect heating according to the known art, whether of just water or milk, a specific quantity of superheated steam in proportion to the quantity of liquid which has to be heated, and in relation to the temperature which the latter must reach is introduced into a quantity of liquid which has to be heated to a given temperature selected using a suitable key associated with a control unit.

As mentioned above, heating predominantly takes place through the heat of condensation which the superheated steam, for example at temperatures between 115-125°C, transfers to the liquid, which, in an open container, is at atmospheric pressure.

In accordance with the known art, provision of the correct quantity of superheated steam to the liquid which has to be heated is a problem because it depends on both the temperature which it is desired to reach and the actual quantity of liquid which has to be heated.

In practice the latter cannot be easily determined, because it is a quantity which the operator of the coffee machine pours into the container subsequently placed beneath the steam lance of the machine without precise control of the quantity poured.

It follows that when the superheated steam feed is opened the quantity of steam may not be appropriate for the quantity of liquid which has to be heated, being too much or too little, all the more so bearing in mind that the devices for opening and closing the conduit for the delivery of superheated steam are preferably calibrated to heat the maximum quantity of liquid envisaged for the machine, for example 1000 cm³, within a predetermined time, normally one minute, to a maximum temperature of 80°C.

Obviously, if the quantities of liquid are smaller the flow of superheated steam will be excessive and may compromise the method of heating.

Where the liquid which has to be heated and possibly frothed with air is milk the abovementioned disadvantage is made worse because of the specific nature of milk, which if the heating power provided is excessive in relation to the quantity runs the risk of burning and forming crusts which compromise the quality of the beverage.

Patent application EP 2 070 456 discloses a steam dispenser, in particular for espresso coffee machines, comprising a first unit designed to adjust the steam dispensing time, which consists in an electrovalve, and a second unit designed to progressively adjust the steam flow, which consists in a manual dispenser, which are controlled separately. The operator has the possibility to select the correct steam flow for the specific drink to be prepared/heated by means of a manual valve.

With the development of modem apparatuses many devices which carry out the process of heating and frothing milk placed in a container positioned beneath the steam lance of a coffee machine in an automatic way, without the need for action by an expert operator, have been developed.

Examples of such apparatuses are described in EP-A-1 501 398 and in EP-A-1 776 905. These however have a limit to their proper functioning. In fact the flow of superheated steam is delivered at a constant flow rate. This consequently determines the heating time in relation to the quantity of milk present in the container, which is not precisely known.

The problem underlying this invention is therefore that of being able to determine the quantity of liquid, particularly but not exclusively milk, which has to be heated in the container placed beneath the steam lance of a coffee machine with sufficient accuracy, and as a consequence to provide an appropriate quantity of superheated steam.

Another aspect of the problem is that of being able to provide a suitable quantity of steam to the liquid which has to be heated, particularly milk, in a time which is also suitable and not less than a specific minimum value which is dependent on a threshold quantity of liquid which has to be heated.

The problem is resolved through the process characterised according to Claim 1 below and with the apparatus characterised according to Claim 11 also below, both the said claims being understood to be made reference to here.

The invention will now be more particularly described with reference to some embodiments of the equipment suitable for implementing the process, illustrated by way of indication and without restriction in the appended drawings, in which:
- Figure 1 shows a diagrammatical view of an apparatus in a first embodiment suitable for implementing the process according to the invention,
- Figure 2 shows a diagrammatical view of an apparatus in a second embodiment suitable for implementing the process according to the invention,
- Figure 3 shows a diagrammatical view of an apparatus in a third embodiment suitable for implementing the process according to the invention.

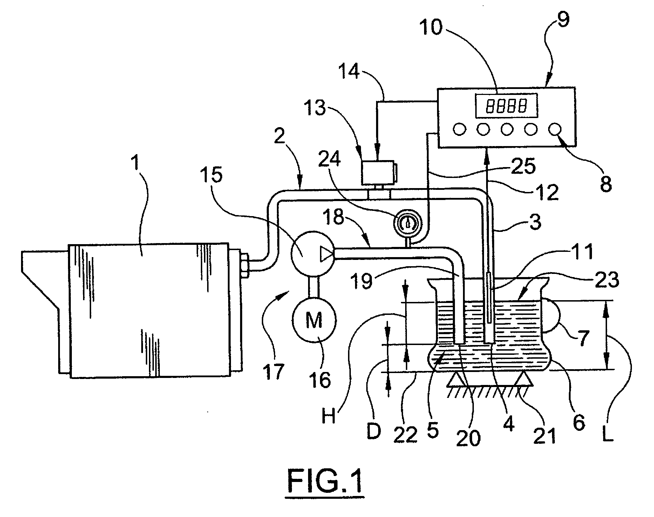

With reference to Figure 1, the source of superheated steam is indicated by 1. In the context of a conventional coffee machine this source comprises a boiler in which steam is at a high temperature, for example between 115 and 125°C, and therefore in a superheated condition.

A steam conduit 2 which terminates in a conventional steam lance 3 provided with a delivery extremity 4 which is to be immersed in the liquid which has to be heated is connected to source 1.

The liquid, indicated diagrammatically by 5, is located in a container 6, which is open to atmospheric pressure and provided with a handle 7 through which it can be positioned beneath steam lance 3 and removed after the liquid has been heated.

Liquid 5 may comprise water intended, for example, for the preparation of infusions, tea, camomile tea and the like, or milk which will be consumed directly as a beverage or added to coffee.

The heating temperature may be set by selecting one of keys 8 of a control unit 9, of an electronic type, on the coffee machine, which is not illustrated in the drawings because it is not necessary for understanding the invention.

The control unit may be provided with a screen 10 for displaying the machine's operating parameters and, for example, the temperature values selected.

While it is being heated the temperature of liquid 5 is detected by a temperature sensor 11 which in the example illustrated is associated with lance 3 but which may, as an alternative, be wholly independent of that lance.

The temperature of liquid 5 may be detected in any way, for example by measuring the radiation produced by the outside wall of container 6 or by remote reading using a conventional infrared ray detector.

The temperature of liquid 5 is indicated to control unit 9 through a connection 12. An electrically-operated valve 13 is placed in superheated steam conduit 2, and through this the conduit can be opened and closed, thus starting and stopping the feed of steam to the lance. Electrically-operated valve 13 may be of the so-called proportional type for continuous regulation of the flow of steam passing per unit time according to commands received from control unit 9 through connection 14, in ways which will be clear from the rest of the description. The equipment is completed by pump 15 driven by an electric motor 16 which in all constitutes a source of air 17.

An air conduit 18 which is extended within container 6 by branch 19 when the container is placed beneath steam lance 3 leaves pump 15.

The open extremity 20 of air conduit 18 is positioned at a specific distance D from the bottom 22 of the container when container 6 is positioned on a reference support 21, for example.

This distance D is unchanging, even though the shape and radial dimensions of container 6 may vary, while the height H between open extremity 20 and the free surface 23 of the liquid present in container 6 varies according to the quantity of liquid present, determining the depth L from the free surface to bottom 22.

A pressure measuring device 24, from which the signal of an electrical or electronic type is sent to control unit 9 through a connection 25 is placed in air conduit 18.

Using the equipment described above, a process for heating a liquid 5 placed in container 6 may be implemented, providing the correct quantity of superheated steam to the liquid according to the selected temperature which it is desired to achieve when heating is complete, but above all in relation to the quantity of liquid measured and actually present in container 6 placed beneath lance 3.

According to the invention, before superheated steam is delivered, pump 15 which passes air into conduit 18 and into length 19, whose open extremity 20 is within liquid 5 positioned at a predetermined distance D from the bottom 22 of the container, is operated.

Pump 15 is operated by means of motor 16 for a sufficient time to fill conduit 18 with air, as determined when the controls for that function included in control unit 9 are calibrated.

The condition of conduit 18, 19 being full can be determined by observing bubbles of air leaving liquid 5.

Once conduit 18 is full of air, pump 15 is stopped with consequent closure of the conduit by the pump.

At this point, the static pressure of the air in conduit 18 is detected by pressure measuring device 24. From this value, the piezometric head of the liquid H can be calculated, and therefore the total depth L = H + D, and knowing the density of the liquid, that is whether milk or water is involved, and the other parameters relating to the shape of container 6, the quantity of liquid present can be expressed as a function of the static pressure measured within air conduit 18 of measuring device 24 at the time when the equipment is calibrated, and the corresponding value can be transmitted to control unit 9.

Once the quantity of liquid present in container 6 and the temperature to which it has to be heated are known, control unit 9 can determine the quantity of superheated steam required. Once this quantity has been determined control unit 9 controls the opening of valve 13 through a suitable command, not only according to the quantity of steam which has to be delivered but also in relation to the time for which the said quantity of superheated steam should preferably be administered to the liquid.

If the liquid which has to be heated is milk and the quantity of milk present in the container is close to a minimum threshold quantity, for example 100 cm³, the time for the delivery of the quantity of superheated steam will be selected to be not less than 15-20 seconds regardless of the final heating temperature selected, to prevent the milk suffering a violent heat shock if it does not have to be frothed, and processed to achieve a fine foam if it has to be frothed.

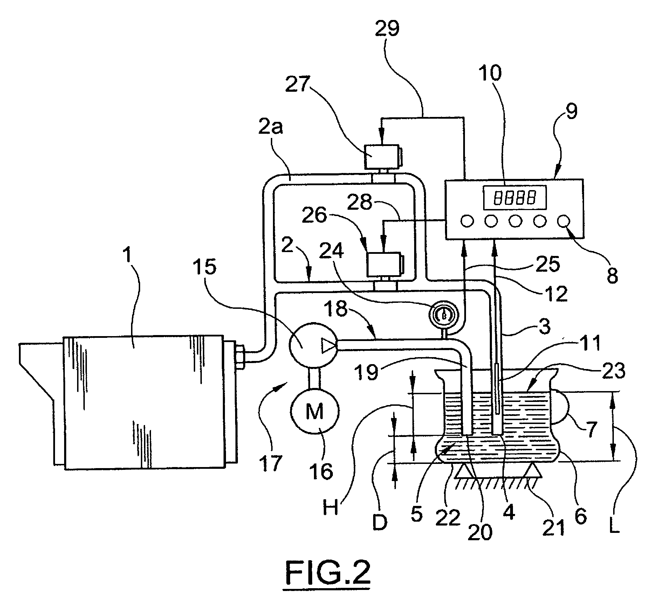

With reference to Figure 2, which illustrates a second embodiment of the apparatus for implementing the process according to the invention, parts corresponding to the version illustrated in Figure 1 are indicated using the same reference numbers.

A proportional electrically-operated valve 13 of the version in Figure 1 is instead replaced by devices 26 and 27 whose opening is preset, both connected to a control unit 9 through corresponding connections 28 and 29.

While device 26 is inserted in conduit 2, device 27 is inserted in a conduit 2a which runs in parallel with conduit 2 and is also connected to the steam source and lance 3.

Preset opening devices 26 and 27, which in practice comprise electrically-operated valves, which are economically very much more convenient than proportional valves, can be calibrated to deliver different respective flows of steam. For example the electrically-operated valve indicated by 26 may be calibrated to deliver a flow rate of steam of 1.6 grams/second, corresponding to a heating power of approximately 3.5 kW, and that indicated by 27 may be calibrated to deliver a steam flow rate of 0.8 grams/second, corresponding to a heating power of approximately 1.5 kW. With the equipment described above it is therefore possible to obtain three different flows of steam by operating one or other of electrically-operated valves 26, 27, or both of them together. The choice will be made according to the quantity of liquid, water or milk, which is detected to be present in container 6.

The function relating to determination of the quantity of liquid in container 6 is the same as that described with reference to the equipment in Figure 1.

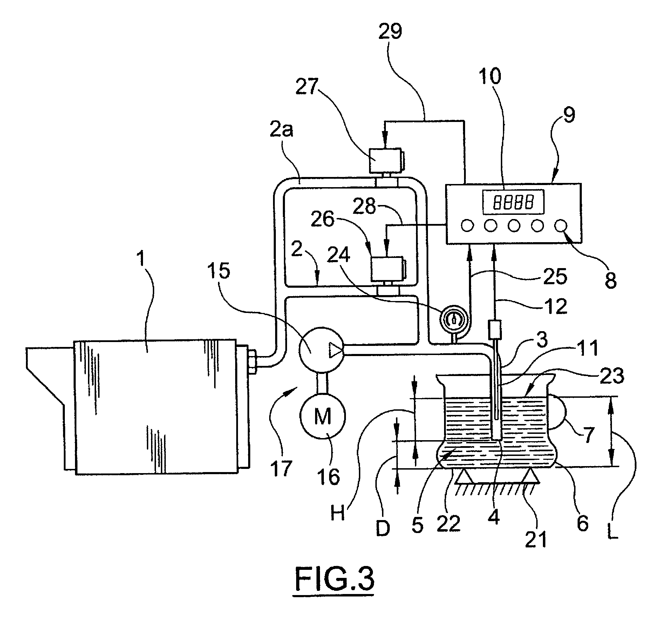

With reference to Figure 3, in which a further version of the apparatus is illustrated, it will be seen that conduit 2 for the superheated steam enters that for air 18 and that therefore delivery extremity 4 of the lance may deliver either superheated steam or air, also performing the functions of open extremity 20 of conduit 18 in Figures 1 and 2.

The quantity of liquid present in container 6 is determined through pressure measuring device 24 as in the previously described embodiments, keeping the steam delivery closed.

Once the quantity of liquid present in container 6 has been determined, the heating temperature is selected, and so also is frothing, if requested, in the case of milk. Where the liquid which has to be heated is milk and it is also required that it should be frothed with air, after the quantity of milk present in container 6 has been determined it is frothed by giving a further command to pump 16 for a time which depends on the degree of frothing which it is desired to achieve and the temperature to which the milk has to be heated.

In practice it is found that for good frothing, even of only 100 cm³ of milk, it is necessary to supply air for at least 15-20 seconds.

According to the versions of the apparatus in Figures 1 and 2 in which conduit 2 for delivery of the superheated steam and conduit 18 for delivery of the air are separate from each other, the two operations can be carried out in their own individual ways as far as delivery times are concerned.

In the case of the version in Figure 3, heating of a small quantity of milk, approximately 100 cm³, considered to be a threshold quantity because it is that required for the preparation of a cappuccino, cannot take place in a time shorter than that considered to be the minimum for good frothing, which, as already mentioned, should preferably be between 15 and 20 seconds.

It is obvious that the equipment in the version illustrated in Figure 3 may be modified by replacing electrically-operated valves 26 and 27 by a single electrically-operated proportional valve such as that indicated by 13 in Figure 1.

Dimensions and materials may obviously be of any kind according to requirements without thereby going beyond the scope of the invention as described above and claimed below.

## Claims

1. A process for heating a quantity of liquid present in a container (6) which is open to atmospheric pressure, is removable and can be positioned beneath the delivery extremity (4) of the lance of a coffee machine, the said lance comprising at least one conduit (2) for heating by means of superheated steam originating from a source (1) thereof, the said delivery extremity (4) being immersed in the quantity of liquid (5) present in the container (6), in which heating takes place predominantly through the transfer of heat of condensation from the superheated steam when it comes into contact with the liquid (5) present in the container (6) open to atmospheric pressure, **characterised in that** it comprises:
- detecting the quantity of liquid present in the container,
- selecting the temperature to which the quantity of liquid detected has to be heated by selecting one of keys (8) of a control unit of an electronic type (9) on the coffee machine,
- determining a required quantity of superheated steam by means of the control unit, the required quantity of superheated steam being determined according to the selected temperature and in relation to the detected quantity of liquid, and
- delivering a flow rate of superheated steam, said flow rate being selected according to the quantity of liquid detected in the container (6) in such a way that the quantity of the heat of condensation to be released to the quantity of liquid per unit time is that necessary to achieve the selected temperature in a time not less than the minimum time which allows the process to be performed correctly.

2. A process according to Claim 1, **characterised in that** the quantity of superheated steam which has to be delivered is selected from at least a first and a second quantity, the first quantity of steam being selected if the quantity of liquid present in the container (6) is of the same size or smaller than a threshold quantity, while the second quantity of superheated steam is selected if the quantity of liquid present in the container is greater than the said threshold quantity.

3. A process according to Claim 1, **characterised in that** the quantity of superheated steam which has to be delivered is selected continuously in proportion to the quantity of liquid detected in the container (6).

4. A process according to any one of Claims 1 to 3, **characterised in that** detection of the quantity of liquid present in the container (6) comprises injecting air into the quantity of liquid present in the container through a conduit (18, 19) originating from a controllable source (15, 16, 17) of air and terminating in an open extremity (20) within the liquid (5) present in the container (6) and terminating at a specific distance (D) from the bottom (22) of the container (6), interrupting this injection of air when that conduit (18, 19) is full of air, detecting the pressure set up within the said air conduit, processing the pressure value measured to determine the depth (L) of liquid present in the container and determining the corresponding quantity in relation to the shape characteristics of the container.

5. A process according to any one of Claims 1 to 4, **characterised in that** the liquid (5) present in the said container (6) open to atmospheric pressure is milk.

6. A process according to Claim 5, **characterised in that** the quantity of superheated steam is delivered to the quantity of milk detected in the container (6), when the said quantity is the same as or less than a threshold quantity, in such a way that the quantity of heat of condensation relative to it is transferred in a time not less than a minimum predetermined time.

7. A process according to Claim 6, in which the said predetermined minimum time is between 8 and 15 seconds, when the threshold quantity is approximately 100 cm³.

8. A process according to any one of Claims 5 to 7, **characterised in that** it also includes a stage of foaming with air injected into the quantity of milk present in the said container (6).

9. A process according to Claim 8, **characterised in that** the said stage of foaming the milk is performed by injecting air into the milk through the air conduit (18, 19) used for determining the quantity of liquid present in the said container (6).

10. A process according to any one of Claims 7 to 9, **characterised in that** the quantity of superheated steam is delivered to the quantity of milk detected in the container (6) in such a way that the quantity of heat of condensation relative to it is transferred in a time of not less than 15-20 seconds, even for quantities of milk greater than the said threshold quantity.

11. An apparatus for implementing the process according to Claims 1 to 10, comprising a lance with at least one steam conduit (2) for delivering superheated steam to heat liquids (5) present in a container (6) which is open to atmospheric pressure and can be positioned beneath and removed from the delivery extremity (4) of the said lance, the said delivery extremity (4) being immersed in the quantity of liquid (5) present in the container (6), the said conduit (2) being provided with at least one device (13, 26, 27) to control the flow of superheated steam passing through the conduit, at least one air conduit (18) leading from a source of air (15, 16, 17) terminating at its open extremity (20) within the liquid (5) present in the said container (6) and terminating at a preset distance (D) from the base of the container (6), the said air conduit (18) being provided with a device (15) which can be controlled to deliver air and interrupt delivery, means (11) for detecting the temperature of the liquid (5) present in the container (6) **characterised in that** it includes a control unit (9) connected to at least the said liquid temperature detector means (11), to the said device (13, 26, 27) to control the flow of superheated steam and to the said device (15) to deliver air and interrupt delivery, and a device (24) for detecting the pressure established in the said air conduit (18), the said device (24) being positioned in the air conduit (18) at a point between the said device (15) for delivery and interruption of the air and the said open extremity (20) of the conduit (18, 19) and being connected to the said control unit (9).

12. An apparatus according to Claim 11, **characterised in that** the said source of air comprises a pump (15) driven by a corresponding motor (16).

13. An apparatus according to Claims 11 and 12, **characterised in that** the said device for delivering air and interrupting delivery in the air conduit comprises the pump (15) when in an operating or non-operating condition.

14. An apparatus according to any one of Claims 11 to 13, **characterised in that** the said device for controlling the flow of superheated steam passing through the steam conduit (2, 2a) comprises a first electrically-operated valve (26) adjusted so as to permit the flow of a first specified flow rate of steam when open and a second electrically-operated valve (27) adjusted to permit the flow of a second different flow rate of steam when open, the said electrically-operated valves (26, 27) being both connected in parallel with the source of superheated steam (1) and the said control unit (9) and operated by the latter separately from each other or jointly.

15. An apparatus according to any one of Claims 11 to 13, **characterised in that** the said device for control of the flow of superheated steam comprises an electrically-operated proportional valve (13) inserted in the superheated steam conduit (2).

16. An apparatus according to any one of Claims 11 to 14, **characterised in that** the steam conduit (2) for delivering superheated steam for heating the liquids (5) present in the said container (6) which is open to atmospheric pressure is inserted into the said air conduit (18).

## Patentansprüche

1. Verfahren zum Erhitzen einer Flüssigkeitsmenge, die sich in einem Behälter (6) befindet, der zum Atmosphärendruck offen ist, abnehmbar ist und unter dem Zuführende (4) der Lanze einer Kaffeemaschine positioniert werden kann, wobei die Lanze wenigstens eine Leitung (2) zum Erhitzen mittels überhitztem Dampf umfaßt, der aus einer Quelle (1) davon stammt, wobei das Zuführende (4) in die Flüssigkeitsmenge (5) eingetaucht wird, die in dem Behälter (6) vorhanden ist, in welchem Erhitzen vorwiegend durch den Transfer von Kondensationswärme von dem überhitzten Dampf stattfindet, wenn er mit der in dem zum Atmosphärendruck offenen Behälter (6) vorhandenen Flüssigkeit (5) in Kontakt kommt, **dadurch gekennzeichnet, daß** es umfaßt:
- Ermitteln der in dem Behälter vorhandenen Flüssigkeitsmenge,
- Auswählen der Temperatur, auf welche die ermittelte Flüssigkeitsmenge erhitzt werden soll, durch Auswahl einer der Tasten (8) einer Steuereinheit eines elektronischen Typs (9) an der Kaffeemaschine,
- Bestimmen einer erforderlichen Menge an überhitztem Dampf mittels der Steuereinheit, wobei die erforderliche Menge an überhitztem Dampf entsprechend der ausgewählten Temperatur und in Relation zur detektierten Flüssigkeitsmenge bestimmt wird, und
- Zuführen einer Durchflußmenge an überhitztem Dampf, wobei die Durchflußmenge entsprechend der in dem Behälter (6) ermittelten Flüssigkeitsmenge so ausgewählt wird, daß die pro Zeiteinheit an die Flüssigkeitsmenge abzugebende Menge an Kondensationswärme diejenige ist, die notwendig ist, die ausgewählte Temperatur in einer Zeit zu erreichen, die nicht kleiner als die minimale Zeit ist, die es ermöglicht, das Verfahren sachgerecht auszuführen.

2. Verfahren nach Anspruch 1, **dadurch gekennzeichnet, daß** die Menge an überhitztem Dampf, welche zugeführt werden muß, aus wenigstens einer ersten und einer zweiten Menge ausgewählt wird, wobei die erste Menge an Dampf ausgewählt wird, wenn die in dem Behälter (6) vorhandene Flüssigkeitsmenge gleich einer oder kleiner als eine Schwellwertmenge ist, während die zweite Menge an übererhitztem Dampf ausgewählt wird, wenn die in dem Behälter vorhandene Flüssigkeitsmenge größer als die Schwellwertmenge ist.

3. Verfahren nach Anspruch 1, **dadurch gekennzeichnet, daß** die Menge an übererhitztem Dampf, welche zugeführt werden soll, kontinuierlich im Verhältnis zu der in dem Behälter (6) ermittelten Flüssigkeitsmenge ausgewählt wird.

4. Verfahren nach einem der Ansprüche 1 bis 3, **dadurch gekennzeichnet, daß** die Ermittlung der in dem Behälter (6) vorhandenen Flüssigkeitsmenge Einspritzen von Luft in die in dem Behälter vorhandene Flüssigkeitsmenge durch eine Leitung (18, 19), die aus einer steuerbaren Luftquelle (15, 16, 17) kommt und in einem offenen Ende (20) in der in dem Behälter (6) vorhandenen Flüssigkeit (5) ausläuft und in einem spezifischen Abstand (D) von dem Boden (22) des Behälters (6) endet, Unterbrechen dieser Lufteinspritzung, wenn die Leitung (18, 19) voller Luft ist, Ermitteln des in der Luftleitung aufgebauten Drucks, Verarbeiten des gemessenen Druckwertes, um die Tiefe (L) der in dem Behälter vorhandenen Flüssigkeit zu bestimmen, und Bestimmen der entsprechenden Menge in Abhängigkeit von den Formeigenschaften des Behälters umfaßt.

5. Verfahren nach einem der Ansprüche 1 bis 4, **dadurch gekennzeichnet, daß** die in dem zum Atmosphärendruck offenen Behälter vorhandene Flüssigkeit (5) Milch ist.

6. Verfahren nach Anspruch 5, **dadurch gekennzeichnet, daß** die Menge an überhitztem Dampf der in dem Behälter (6) ermittelten Menge an Milch dann, wenn die Menge gleich oder kleiner einer Schwellwertmenge ist, derart zugeführt wird, daß die darauf bezogene Kondensationswärmemenge in einer Zeit übertragen wird, die nicht kleiner ist als eine vorbestimmte Minimalzeit.

7. Verfahren nach Anspruch 6, wobei die vorbestimmte Minimalzeit zwischen 8 und 15 Sekunden liegt, wenn die Schwellwertmenge ungefähr 100 cm³ beträgt.

8. Verfahren nach einem der Ansprüche 5 bis 7, **dadurch gekennzeichnet, daß** es auch eine Phase des Aufschäumens mit Luft, die in die in dem Behälter (6) vorhandene Milchmenge eingespritzt wird, umfaßt.

9. Verfahren nach Anspruch 8, **dadurch gekennzeichnet, daß** die Phase des Aufschäumens der Milch durch Einspritzen von Luft in die Milch durch die Luftleitung (18, 19), die zum Bestimmen der in dem Behälter (6) vorhandenen Flüssigkeitsmenge verwendet wird, durchgeführt wird.

10. Verfahren nach einem der Ansprüche 7 bis 9, **dadurch gekennzeichnet, daß** die Menge an überhitztem Dampf derart der in dem Behälter (6) ermittelten Milchmenge zugeführt wird, daß die darauf bezogene Kondensationswärmemenge in einer Zeit übertragen wird, die nicht weniger als 15 bis 20 Sekunden beträgt, und zwar auch für Milchmengen, die größer sind als die Schwellwertmenge.

11. Vorrichtung zum Durchführen des Verfahrens nach den Ansprüchen 1 bis 10, umfassend eine Lanze mit wenigstens einer Dampfleitung (2) zum Zuführen von überhitztem Dampf, um Flüssigkeiten (5) zu erhitzen, die in einem Behälter (6) vorhanden sind, der zum Atmosphärendruck offen ist und der unter dem Zuführende (4) der Lanze positioniert und davon entfernt werden kann, wobei das Zuführende (4) in die in dem Behälter (6) vorhandene Flüssigkeitsmenge (5) eingetaucht wird, wobei die Leitung (2) mit wenigstens einer Vorrichtung (13, 26, 27) versehen ist, um den Fluß an überhitztem Dampf, der durch die Leitung fließt, zu steuern, wobei wenigstens eine von einer Luftquelle (15, 16, 17) kommende Luftleitung (18) an ihrem offenen Ende (20) in der in dem Behälter (6) vorhandenen Flüssigkeit (5) endet und in einem voreingestellten Abstand (D) von dem Boden des Behälters (6) endet, wobei die Luftleitung (18) mit einer Vorrichtung (15) versehen ist, die gesteuert werden kann, um Luft zuzuführen und die Zufuhr zu unterbrechen, Mittel (11) zum Ermitteln der Temperatur der in dem Behälter (6) vorhandenen Flüssigkeit (5), **dadurch gekennzeichnet, daß** sie eine Steuereinheit (9), die zumindest mit dem Flüssigkeitstemperaturermittlungsmittel (11), mit der Vorrichtung (13, 26, 27) zur Steuerung des Flusses an hocherhitztem Dampf und mit der Vorrichtung (15) zum Zuführen von Luft und zum Unterbrechen der Zufuhr verbunden ist, und eine Vorrichtung (24) zum Ermitteln des in der Luftleitung (18) aufgebauten Druckes umfaßt, wobei die Vorrichtung (24) in der Luftleitung (18) an einem Punkt zwischen der Vorrichtung (15) zum Zuführen und Unterbrechen der Luft und dem offenen Ende (20) der Leitung (18, 19) positioniert ist und mit der Steuereinheit (9) verbunden ist.

12. Vorrichtung nach Anspruch 11, **dadurch gekennzeichnet**, das die Luftquelle eine Pumpe (15) umfaßt, die durch einen entsprechenden Motor (16) angetrieben wird.

13. Vorrichtung nach den Ansprüchen 11 und 12, **dadurch gekennzeichnet, daß** die Vorrichtung zum Zuführen von Luft und zum Unterbrechen der Zufuhr in der Luftleitung die Pumpe (15) umfaßt, wenn sie sich in einem Betriebs- oder Nichtbetriebszustand befindet.

14. Vorrichtung nach einem der Ansprüche 11 bis 13, **dadurch gekennzeichnet, daß** die Vorrichtung zum Steuern des Flusses an überhitztem Dampf, der durch die Dampfleitung (2, 2a) strömt, ein erstes elektrisch betriebenes Ventil (26), das so eingestellt ist, das es den Fluß einer ersten spezifizierten Durchflußmenge an Dampf zuläßt, wenn es offen ist, und ein zweites elektrisch betriebenes Ventil (27) umfaßt, das so eingestellt ist, daß es den Fluß einer zweiten unterschiedlichen Durchflußmenge an Dampf zuläßt, wenn es offen ist, wobei die elektrisch betriebenen Ventile (26, 27) beide parallel mit der Quelle (1) des überhitzten Dampfes und der Steuereinheit (9) verbunden sind und durch die letztere getrennt voneinander oder gemeinsam betrieben werden.

15. Vorrichtung nach einem der Ansprüche 11 bis 13, **dadurch gekennzeichnet, daß** die Vorrichtung zum Steuern des Flusses an überhitztem Dampf ein elektrisch betriebenes Proportionalventil (13) umfaßt, das in die Leitung (2) für überhitzten Dampf eingeführt ist.

16. Vorrichtung nach einem der Ansprüche 11 bis 14, **dadurch gekennzeichnet, daß** die Dampfleitung (2) zum Zuführen von überhitztem Dampf zum Erhitzen der Flüssigkeiten (5), die in dem zum Atmosphärendruck offenen Behälter (6) vorhanden ist, in die Luftleitung (18) eingesetzt ist.

## Revendications

1. Procédé de chauffage d'une quantité de liquide présente dans un réservoir (6) qui est ouvert à la pression atmosphérique, est détachable et peut être positionné au-dessous de l'extrémité de distribution (4) de la lance d'une machine à café, ladite lance comprenant au moins une conduite (2) de chauffage au moyen de vapeur surchauffée en provenance d'une source (1) de celle-ci, ladite extrémité de distribution (4) étant immergée dans la quantité de liquide (5) présente dans le réservoir (6) dans lequel le chauffage a lieu pour la plupart par le transfert de chaleur de condensation à partir de la vapeur surchauffée lorsque celle-ci entre en contact avec le liquide (5) présent dans ledit réservoir (6) ouvert à la pression atmosphérique, **caractérisé par le fait qu'**il comprend :
- détecter la quantité de liquide présente dans le réservoir,
- choisir la température à laquelle la quantité de liquide détectée doit être chauffée, en choisissant l'une des touches (8) d'une unité de commande d'un type électronique (9) sur la machine à café,
- déterminer une quantité requise de vapeur surchauffée au moyen de ladite unité de commande, la quantité requise de vapeur surchauffée étant déterminée selon la température choisie et par rapport à la quantité de liquide détectée, et
- délivrer un débit de vapeur surchauffée, ledit débit étant choisi selon la quantité de liquide détectée dans le réservoir (6) de telle manière que la quantité de chaleur de condensation à dégager à la quantité de liquide par unité de temps est celle qui est nécessaire pour atteindre la température choisie en un temps non pas inférieur au temps minimum qui permet la mise en oeuvre correcte du procédé.

2. Procédé selon la revendication 1, **caractérisé par le fait que** la quantité de vapeur surchauffée qui doit être délivrée est choisie dans au moins une première quantité et une deuxième quantité, la première quantité de vapeur étant choisie si la quantité de liquide présente dans ledit réservoir (6) est égale ou inférieure à une quantité de seuil, tandis que la deuxième quantité de vapeur surchauffée est choisie si la quantité de liquide présente dans ledit réservoir est supérieure à la quantité de seuil.

3. Procédé selon la revendication 1, **caractérisé par le fait que** la quantité de vapeur surchauffée qui doit être délivrée est choisie de manière continue en proportion de la quantité de liquide détectée dans le réservoir (6).

4. Procédé selon l'une quelconque des revendications 1 à 3, **caractérisé par le fait que** la détection de la quantité de liquide présente dans le réservoir (6) comprend l'injection d'air dans la quantité de liquide présente dans ledit réservoir, à travers une conduite (18, 19) provenant d'une source d'air (15, 16, 17) commandable et se terminant en une extrémité ouverte (20) à l'intérieur du liquide (5) présent dans le réservoir (6) et se terminant à une distance spécifique (D) par rapport au fond (22) du réservoir (6), l'interruption de cette injection d'air lorsque ladite conduite (18, 19) est remplie d'air, la détection de la pression établie à l'intérieur de la conduite d'air, le traitement de la valeur de pression mesurée afin de déterminer la profondeur (L) de liquide présent dans le réservoir ainsi que la détermination de la quantité correspondante en relation avec les caractéristiques de forme dudit réservoir.

5. Procédé selon l'une quelconque des revendications 1 à 4, **caractérisé par le fait que** le liquide (5) présent dans ledit réservoir (6) ouvert à la pression atmosphérique est du lait.

6. Procédé selon la revendication 5, **caractérisé par le fait que** la quantité de vapeur surchauffée est délivrée à la quantité de lait détectée dans le réservoir (6), lorsque ladite quantité est égale ou inférieure à une quantité de seuil, de telle manière que la quantité de chaleur de condensation y relative est transférée en un temps qui n'est pas inférieur à un temps minimum prédéterminé.

7. Procédé selon la revendication 6, dans lequel ledit temps minimum prédéterminé est compris entre 8 et 15 secondes lorsque la quantité de seuil est de 100 cm³ à peu près.

8. Procédé selon l'une quelconque des revendications 5 à 7, **caractérisé par le fait qu'**il comprend également une phase de moussage avec de l'air injecté dans la quantité de lait présente à l'intérieur du réservoir (6).

9. Procédé selon la revendication 8, **caractérisé par le fait que** ladite phase de moussage du lait est réalisée en injectant de l'air dans le lait à travers ladite conduite d'air (18, 19) utilisée pour déterminer la quantité de liquide présente dans ledit réservoir (6).

10. Procédé selon l'une quelconque des revendications 7 à 9, **caractérisé par le fait que** la quantité de vapeur surchauffée est délivrée à la quantité de lait détectée dans le réservoir (6), de telle manière que la quantité de chaleur de condensation y relative est transférée en un temps qui n'est pas inférieur à 15 - 20 secondes, même pour des quantités de lait supérieures à ladite quantité de seuil.

11. Dispositif pour la mise en oeuvre du procédé selon les revendications 1 à 10, comprenant une lance avec au moins une conduite de vapeur (2) pour délivrer de la vapeur surchauffée afin de chauffer des liquides (5) présents dans un réservoir (6) qui est ouvert à la pression atmosphérique et peut être positionné au-dessous et écarté de l'extrémité de distribution (4) de ladite lance, ladite extrémité de distribution (4) étant immergée dans la quantité de liquide (5) présente dans ledit réservoir (6), ladite conduite (2) étant pourvue d'au moins un dispositif (13, 26, 27) pour commander le flux de vapeur surchauffée qui passe à travers la conduite, au moins une conduite d'air (18) provenant d'une source d'air (15, 16, 17) se terminant à son extrémité ouverte (20) à l'intérieur du liquide (5) présent dans ledit réservoir (6) et se terminant à une distance préréglée (D) par rapport à la base du réservoir (6), ladite conduite d'air (18) étant pourvue d'un dispositif (15) qui peut être commandé afin d'amener de l'air et d'interrompre l'alimentation, des moyens (11) de détection de la température du liquide (5) présent dans le réservoir (6), **caractérisé par le fait qu'**il comprend une unité de commande (9) connectée à au moins lesdits moyens de détection de température de liquide (11), audit dispositif (13, 26, 27) pour commander le flux de vapeur surchauffée et audit dispositif (15) pour amener de l'air et interrompre l'alimentation, ainsi qu'un dispositif (24) pour détecter la pression établie dans ladite conduite d'air (18), le dispositif (24) étant positionné dans ladite conduite d'air (18) sur un point situé entre ledit dispositif (15) d'alimentation et d'interruption d'air et ladite extrémité ouverte (20) de la conduite (18, 19) et étant connecté à ladite unité de commande (9).

12. Dispositif selon la revendication 11, **caractérisé par le fait que** ladite source d'air comprend une pompe (15) entraînée par un moteur (16) correspondante.

13. Dispositif selon les revendications 11 et 12, **caractérisé par le fait que** ledit dispositif d'alimentation en air et d'interruption d'alimentation dans ladite conduite d'air comprend ladite pompe (15) lorsqu'elle est dans un état opérationnel ou non opérationnel.

14. Dispositif selon l'une quelconque des revendications 11 à 13, **caractérisé par le fait que** ledit dispositif de commande du flux de vapeur surchauffée qui passe à travers la conduite de vapeur (2, 2a) comprend une première valve actionnée électriquement (26) qui est ajustée de manière à ce qu'elle permette le flux d'un premier débit spécifié de vapeur lorsqu'elle est ouverte, et une deuxième valve actionnée électriquement (27) ajustée de manière à ce qu'elle permette le flux d'un deuxième débit différent de vapeur lorsqu'elle est ouverte, lesdites valves actionnées électriquement (26, 27) étant toutes les deux connectées en parallèle avec la source de vapeur surchauffée (1) et avec ladite unité de commande (9) et étant actionnées par cette dernière soit séparément l'une de l'autre soit ensemble.

15. Dispositif selon l'une quelconque des revendications 11 à 13, **caractérisé par le fait que** ledit dispositif de commande du flux de vapeur surchauffée comprend une valve proportionnelle (13) actionnée électriquement qui est insérée dans ladite conduite de vapeur surchauffée (2).

16. Dispositif selon l'une quelconque des revendications 11 à 14, **caractérisé par le fait que** la conduite de vapeur (2) pour délivrer de la vapeur surchauffée afin de chauffer les liquides (5) présents dans ledit réservoir (6) qui est ouvert à la pression atmosphérique est insérée dans ladite conduite d'air (18).
